# EUROPÄISCHE PATENTANMELDUNG

(11) **EP 2 060 801 A1**
(43) Veröffentlichungstag der Anmeldung: **20.05.2009**
(21) Anmeldenummer: 07022423.3
(22) Anmeldetag: 19.11.2007
(51) Int. Cl.: F16B 7/04, F16K 51/00

(54) **Kupplungskonzept für Ventilspindel und Antriebsspindel**

(71) Anmelder: SIEMENS AKTIENGESELLSCHAFT, 80333 München (DE)
(72) Erfinder: Kommel, Erhard, 58452 Witten (DE)

(57) **Zusammenfassung**

Die Erfindung betrifft eine Kraftübertragungseinrichtung (9) zum Verbinden einer Ventilspindel (1) und einer Antriebsspindel, wobei die Kraftübertragungseinrichtung (9) eine Kupplungshälfte (8), einen Haltering (7) und einen zweiteiligen Feststellring (6, 6a, 6b) aufweist, wobei der zweiteilige Feststellring (6, 6a, 6b) an der Ventilspindel (1) angeordnet ist und der Haltering (7) gegen diesen zweiteiligen Feststellring (6, 6a, 6b) eine Kraft ausüben kann, wobei der Haltering (7) schließlich kraftschlüssig mit der Kupplungshälfte (8) verbunden ist und die Kupplungshälfte (8) über eine Verschraubung mit der Antriebsspindel verbunden ist, wodurch eine Kraft über diese Kraftübertragungseinrichtung (9) von der Antriebsspindel auf die Ventilspindel (1) übertragen wird.

## Beschreibung

Dampfturbinenanlagen werden mit einem Dampf beaufschlagt, der vergleichsweise hohe Temperaturen und hohe Drücke aufweist. Neben den Komponenten der Dampfturbine, wie z. B. der Rotor und das Dampfturbinengehäuse, werden Zuführungsleitungen und Dampfturbinenventile thermisch stark belastet. In der Regel werden bei einer Dampfturbine sowohl ein Schnellschlussventil als auch ein Stellventil verwendet. Das schnell wirkende Schnellschlussventil ist zwischen der Dampfturbine und der Frischdampfleitung bzw. des Dampferzeugers angeordnet und wirkt zum Schutz der Dampfturbine. Bei Gefahr wird die Dampfzufuhr schlagartig unterbrochen, ausgelöst von Wächtern oder durch einen Handeingriff. Stellventile dagegen steuern den Dampfstrom zur Dampfturbine in Abhängigkeit von einer jeweiligen Belastung. In einigen Ausführungsformen wird das Schnellschluss- und eine Stellventil in einem gemeinsamen Gehäuse eingebaut.

Sowohl ein Schnellschluss- als auch ein Stellventil umfasst unter anderem eine Ventilspindel, die mit einem Ventilkegel gekoppelt ist. Der Ventilkegel liegt an einem Ventilsitz, wodurch der Dampf über diesen Ventilsitz geregelt wird. Diese Öffnung wird durch die Bewegung der Ventilspindel erreicht. Da im Inneren des Ventils der Dampf hohe Drücke und hohe Temperaturen aufweisen kann, ist zwingend eine gute Dichtung zwischen der Ventilspindel und dem Ventilgehäuse, in dem die Ventilspindel beweglich angeordnet ist, erforderlich. Darüber hinaus wird die Ventilspindel mit einer Antriebsspindel miteinander gekoppelt. Die Antriebsspindel überträgt eine Antriebskraft auf die Ventilspindel.

Derzeit wird eine Scheibe auf die Antriebsspindel und eine Mutter auf die Ventilspindel geschraubt, wobei schließlich eine Scheibe auf die Ventilspindel derart aufgebracht wird, dass die Scheibe gegen die Mutter drückt und schließlich die Scheibe mit der Antriebsscheibe mittels einer Verschraubung verbunden wird. Nachteilig hier ist, dass bei den hohen auftretenden Kräften einzelne Gewindegänge zwischen der Ventilspindel und der Mutter zerstört werden, was zu einem unerwünschten Stillstand der Dampfturbinenanlage führt. Mit dieser Erfindung soll dieser Nachteil behoben werden.

Es ist daher Aufgabe der Erfindung eine Kraftübertragungseinrichtung zum Verbinden einer Ventilspindel und einer Antriebsspindel anzugeben, mit der hohe Kräfte übertragen werden können.

Gelöst wird diese Aufgabe durch eine Kraftübertragungseinrichtung zum Verbinden einer Ventilspindel und einer Antriebsspindel, umfassend eine Kupplungshälfte, einen Haltering und einen zweiteiligen Feststellring, wobei der zweiteilige Feststellring eine Feststellringkontaktfläche aufweist, die zum Kontaktieren mit einer korrespondierenden Gegenkontaktfläche der Ventilspindel ausgebildet ist, wobei die Kupplungshälfte zum Verbinden mit der Antriebsspindel ausgebildet ist, wobei der Haltering eine Kraftübertragungskontaktfläche aufweist, die zum Kontaktieren mit einer korrespondierenden Gegenkraftübertragungskontaktfläche des zweiteiligen Feststellringes ausgebildet ist, wobei der Haltering kraftschlüssig mit der Kupplungshälfte verbunden ist.

Die Erfindung verzichtet somit gänzlich auf eine auf der Ventilspindel angebrachten Mutter. Dadurch ist die Gefahr einer Zerstörung des zwischen der Mutter und der Ventilspindel angeordneten Gewindes nicht vorhanden. Die Mutter wird sozusagen durch den zweiteiligen Feststellring ersetzt, der über die Feststellringkontaktfläche und der korrespondierenden Gegenkontaktfläche der Ventilspindel mit der Ventilspindel kraftschlüssig verbunden ist.

Ein weiterer Vorteil der Erfindung ist, dass der zweiteilige Feststellring leichter von der Ventilspindel demontierbar ist im Vergleich zu der im Stand der Technik verwendeten Mutter.

In den Unteransprüchen sind vorteilhafte Weiterbildungen angegeben.

So wird in einer ersten vorteilhaften Weiterbildung der Haltering mittels einer Verschraubung mit der Kupplungshälfte kraftschlüssig verbunden. Dadurch ist eine leichte Montage und Demontage des Halteringes mit der Kupplungshälfte möglich.

In einer weiteren vorteilhaften Weiterbildung weist die Ventilspindel ein zylinderförmiges Endteil mit einem Außenventilspindeldurchmesser D_{Außen} auf und der zweiteilige Feststellring einen Innenfeststellringdurchmesser D_{Innen} auf, der kleiner ist als D_{Außen}. Somit ist es konstruktiv einfach das zylinderförmige Endteil der Ventilspindel mit dem zweiteiligen Feststellring kraftschlüssig zusammen zu bauen. Vorteilhafterweise ist die Feststellringkontaktfläche kreisförmig ausgestaltet. Dadurch ist eine leichte Herstellbarkeit möglich, denn kreisringförmige Flächen lassen sich mittels Drehmaschinen vergleichsweise leicht herstellen.

In einer weiteren vorteilhaften Weiterbildung ist der zweiteilige Feststellring aus einem ersten Halbring und einem zweiten Halbring aufgebaut. Dadurch ist eine leichte Montage des ersten Halbringes und dem zweiten Halbringes zu dem zweiteiligen Feststellring möglich.

In einer weiteren vorteilhaften Weiterbildung ist der erste Halbring mittels einer Verschraubung mit dem zweiten Halbring verbunden, wodurch eine leichte Montage und Demontage möglich ist.

In einer weiteren Vorteilhaften Weiterbildung weist der zweiteilige Feststellring einen Feststellringaußendurchmesser D_{FR}, außen und der Haltring einen Halteringinnendurchmesser D_{HR}, _{Innen} auf, wobei der Feststellringaußendurchmesser größer ist als der Halteringinnendurchmesser D_{HR, Innen}. Dadurch ist eine einfache Möglichkeit gegeben, Kräfte vom zweiteiligen Feststellring auf den Haltering zu übertragen. Vorteilhafterweise ist die Feststellringkontaktfläche und/oder die Kraftübertragungskontaktfläche im Wesentlichen senkrecht zur Längsrichtung der Ventilspindel ausgebildet. Da die Kräfte von der Antriebsspindel im Wesentlichen linear zur Längsausrichtung der Antriebsspindel und der Ventilspindel gerichtet ist, ist eine senkrechte Anordnung der Feststellringkontaktfläche und/oder der Kraftübertragungskontaktfläche vorteilhaft, da keine störenden Kraftkomponenten entstehen, die nicht parallel zur Längsausrichtung ausgerichtet sind.

Vorteilhafterweise ist die Kupplungshälfte mittels einer Gewindeverschraubung mit der Antriebsspindel verbunden, wodurch eine leichte Montage und Demontage möglich ist.

Die Erfindung wird beispielhaft anhand der Zeichnungen näher erläutert. Es zeigen, teilweise schematisch und nicht maßstäblich:
- Figur 1: einen Längsschnitt eines Teils einer Kraftübertragungseinrichtung,
- Figur 2: eine Schnittdarstellung entlang der Linie A-A aus Figur 1.

Gleiche Bezugszeichen haben in den verschiedenen Figuren die gleiche Bedeutung.

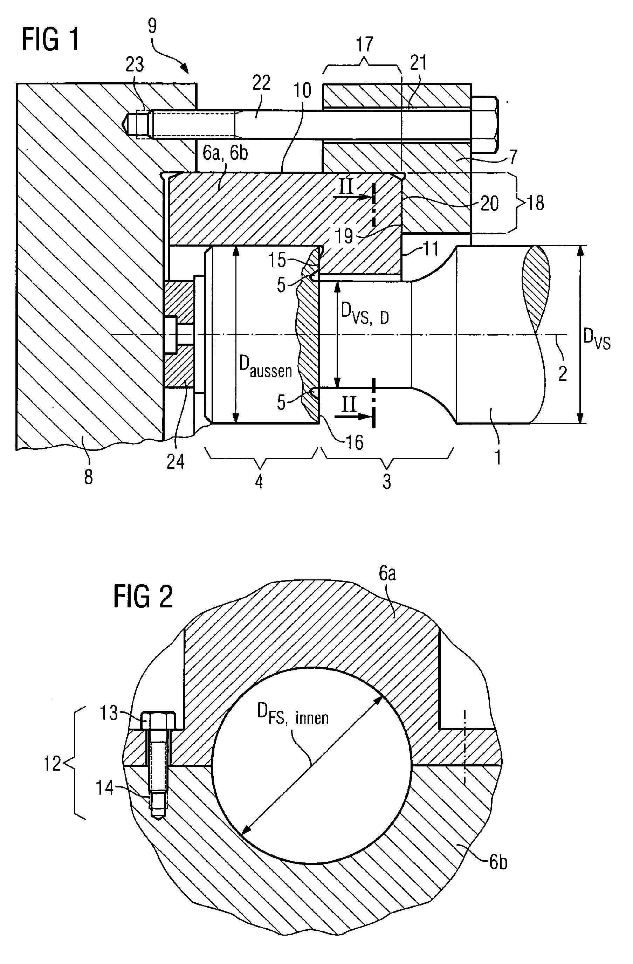

Die Figur 1 zeigt das Ende einer Ventilspindel 1. Diese Ventilspindel 1 ist aus einem geeigneten Material hergestellt und im Wesentlichen zylinderförmig um eine Rotationsachse 2 ausgebildet. Die Ventilspindel 1 weist einen Durchmesser D_{VS} auf. In einem Drehbereich 3 ist der Durchmesser der Ventilspindel 1 auf einen geringeren Durchmesser D_{VS, D} gedreht. An den Drehbereich 3 schließt ein zylinderförmiges Endteil 4 an. Das zylinderförmige Endteil weist einen Außenventilspindeldurchmesser D_{Außen} auf, der größer ist als der Durchmesserdrehbereich D_{VS, D} und im Wesentlichen gleichgroß ist wie der Durchmesser der Ventilspindel Dvs. Um störende Kerbkräfte zu vermeiden ist der Bereich zwischen dem Drehbereich 3 und dem zylinderförmigen Endteil 4 mit einer Hinterschneidung 5 ausgebildet. In der Figur 1 ist des weiteren ein zweiteiliger Feststellring 6, ein Haltering 7 und eine Kupplungshälfte 8 dargestellt, die zusammen eine Kraftübertragungseinrichtung 9 bilden.

Der zweiteilige Feststellring 6, 6a, 6b ist im Querschnitt gesehen im Wesentlichen L-förmig ausgebildet. Und weist hierzu eine lange Sehne 10 und eine kurze Sehne 11 auf. Der zweiteilige Feststellring 6, 6a, 6b weist einen Innendurchmesser im Bereich der langen Sehne 10 auf, der im Wesentlichen gleichgroß ist wie der Außenventilspindeldurchmesser D_{Außen}. Im Bereich der kurzen Sehne 11 weist der zweiteilige Feststellring 6, 6a, 6b einen Feststellringinnendurchmesser D_{FS, Innen} auf, der geringfügig größer ist als der Durchmesser im Drehbereich D_{VS, D}.

In der Figur 2 ist eine Schnittdarstellung des Feststellrings 6, 6a, 6b entlang der Linie A-A aus der Figur 1 zu sehen. Der zweiteilige Feststellring 6, 6a, 6b umfasst einen oberen Feststellhalbring 6a und einen unteren Feststellhalbring 6b auf. Der obere Feststellhalbring 6a und der untere Feststellhalbring 6b sind mittels einer Verschraubung 12 kraftschlüssig miteinander verbunden. Der Übersichtlichkeit wegen ist in der Figur 2 lediglich eine Schraube 13, die in eine Gewinde 14 eingreift dargestellt.

Der zweiteilige Feststellring 6, 6a, 6b weist eine Feststellringkontaktfläche 15 auf, die zum Kontaktieren mit einer korrespondierenden Gegenkontaktsfläche 16 der Ventilspindel ausgebildet ist. Die Feststellringkontaktfläche 15 und die Gegenkontaktfläche 16 bilden somit einen Ring mit einer Dicke von im Wesentlichen D_{Außen} - D_{VS, D}.

Der Haltering 7 ist kreisförmig um die Rotationsachse 2 ausgebildet und weist einen Innendurchmesser auf, der größer ist als der Außenventilspindeldurchmesser D_{Außen} und der Durchmesser der Ventilspindel D_{VS}, damit dieser über die Ventilspindel 1 verschieblich angeordnet werden kann. Im Querschnitt gesehen ist der Haltering im Wesentlichen L-förmig ausgebildet, ähnlich wie der zweiteilige Feststellring 6, 6a, 6b. Daher umfasst der Haltering 7 ebenfalls eine lange Sehne 17 und eine kurze Sehne 18 auf. Der Haltering 7 weist eine Kraftübertragungskontaktfläche 19 auf, die zum Kontaktieren mit einer korrespondierenden Gegenkraftübertragungskontaktfläche 20 des zweiteiligen Feststellringes 6, 6a, 6b ausgebildet ist. Aus Symmetriegründen sind die Kraftübertragungskontaktflächen 19 und die Gegenkraftübertragungskontaktfläche 20 ringkreisförmig. Der Übersichtlichkeit wegen ist auf eine Darstellung des zweiteiligen Feststellringes und des Halteringes unterhalb der Rotationsachse 2 in der Figur 1 verzichtet worden.

Die Kupplungshälfte 8 ist kraftschlüssig mit dem Haltering 7 verbunden. Dazu weist der Haltering 7 mehrere Bohrungen 21 auf, die zum Durchführen einer Schraube geeignet sind. Die Kupplungshälfte 8 ist mit einem Gewinde 23 das zur Aufnahme der Schraube 22 ausgebildet ist gefertigt. Der Übersichtlichkeit wegen ist in der Figur 1 lediglich eine Schraube 22 dargestellt. Es werden mehrere Schrauben 22 auf dem Haltering 7 angeordnet.

Die Kupplungshälfte 8 ist mittels einer Gewindeverschraubung mit der Antriebsspindel verbunden. Der Übersichtlichkeit wegen ist die Antriebsspindel und die Gewindeverschraubung in der Figur 1 nicht dargestellt. Als Abstandshalter dient eine Passscheibe 24. Eine Bewegung der Ventilspindel 1 entlang der Rotationsachse 2 wird über den zweiteiligen Feststellring 6, 6a, 6b dem Haltering 7, den Schrauben 22 und der Kupplungshälfte 8 auf die Antriebsspindel übertragen.

## Patentansprüche

1. Kraftübertragungseinrichtung (9) zum Verbinden einer Ventilspindel (1) und einer Antriebsspindel, umfassend eine Kupplungshälfte (8,) einen Haltering (7) und einen zweiteiligen Feststellring (6, 6a, 6b),
wobei der zweiteilige Feststellring (6, 6a, 6b) eine Feststellringkontaktfläche (15) aufweist, die zum Kontaktieren mit einer korrespondierenden Gegenkontaktfläche (16) der Ventilspindel (1) ausgebildet ist,
wobei die Kupplungshälfte (8) zum Verbinden mit der Antriebsspindel ausgebildet ist,
wobei der Haltering (7) eine Kraftübertragungskontaktfläche (19) aufweist, die zum Kontaktieren mit einer korrespondierenden Gegenkraftübertragungskontaktfläche (20) des zweiteiligen Feststellrings (6, 6a, 6b) ausgebildet ist,
wobei der Haltering (7) kraftschlüssig mit der Kupplungshälfte (8) verbunden ist.

2. Kraftübertragungseinrichtung (9) nach Anspruch 1,
wobei der Haltering (7) mittels einer Verschraubung (21, 22, 23) mit der Kupplungshälfte (8) kraftschlüssig verbunden ist.

3. Kraftübertragungseinrichtung (9) nach Anspruch 1 oder 2,
wobei die Ventilspindel (1) ein zylinderförmiges Endteil (4) mit einem Außenventilspindeldurchmesser D_{Außen} aufweist, und der zweiteilige Feststellring (6, 6a, 6b) einen Innenfeststellringdurchmesser D_{Innen} aufweist, der kleiner ist als D_{Außen}.

4. Kraftübertragungseinrichtung (9) nach Anspruch 1 bis 3,
wobei die Feststellringkontaktfläche (15) kreisförmig ausgestaltet ist.

5. Kraftübertragungseinrichtung (9) nach einem der vorhergehenden Ansprüche,
wobei der zweiteilige Feststellring (6, 6a, 6b) einen ersten Halbring (6a) und einen zweiten Halbring (6b) umfasst.

6. Kraftübertragungseinrichtung (9) nach Anspruch 5,
wobei der erste Halbring (6a) mittels einer Verschraubung (12, 13, 14) mit dem zweiten Halbring (6b) verbunden ist.

7. Kraftübertragungseinrichtung (9) nach einem der vorhergehenden Ansprüche,
wobei der zweiteilige Feststellring (6, 6a, 6b) einen Feststellringaußendurchmesser D_{FR}, außen und der Haltering (7) einen Halteringinnendurchmesser D_{HR, innen} aufweist,
wobei D_{FR, außen} > D_{HR, innen} ist.

8. Kraftübertragungseinrichtung (9) nach einem der vorhergehenden Ansprüche,
wobei die Feststellringkontaktfläche (15) und/oder die Kraftübertragungskontaktfläche (19) im Wesentlichen senkrecht zur Längsrichtung (2) der Ventilspindel ausgebildet ist.

9. Kraftübertragungseinrichtung (9) nach einem der vorhergehenden Ansprüche,
wobei die Kupplungskräfte (8) mittels einer Gewindeverschraubung mit der Antriebsspindel verbunden sind.
